# EUROPEAN PATENT APPLICATION

(11) **EP 2 842 977 A1**
(43) Date of publication of application: **04.03.2015**
(21) Application number: 13781928.0
(22) Date of filing: 25.04.2013
(51) Int. Cl.: C08G 18/06, C08G 18/00, C08G 101/00

(54) **POLYURETHANE FOAM COMPOSITION, AND METHOD FOR PRODUCING SOFT POLYURETHANE FOAM**

(30) Priority: 26.04.2012 JP 2012101411
(71) Applicant: Momentive Performance Materials Japan LLC, Tokyo 107-6112 (JP)
(72) Inventor: SOFUKU Hiroshi, Tokyo 107-6112 (JP); OGAWA Yuta, Tokyo 107-6112 (JP); NASA Toshihisa, Tokyo 107-6112 (JP)
(74) Representative: Granleese, Rhian Jane
(86) International application number: PCT/JP2013/062187
(87) International publication number: WO 2013/161931

(57) **Abstract**

An expandable polyurethane composition includes (A) polyisocyanate, (B) active hydrogen containing compound including (B1) polyol and (B2) water, a catalyst, and (C) one or more plasticizers selected from the group consisting of a monoester compound, a diester compound, a triester compound, and a tetraester compound by 0.5 to 20 parts by mass relative to 100 parts by mass of the (B1) polyol. A flexible polyurethane foam can be obtained of which wet set is improved and feeling is good.

## Description

### FIELD

The present invention relates to an expandable polyurethane composition and a manufacturing method of a flexible polyurethane foam, and particularly relates to a foam composition for forming a flexible polyurethane foam, in which a specific plasticizer is compounded by a specific ratio, and a manufacturing method of a flexible polyurethane foam using the foam composition.

### BACKGROUND

Due to their high cushioning property, flexible polyurethane foams are widely used for vehicle cushion materials, furniture mats, beddings, miscellaneous goods, and the like. The flexible polyurethane foams are generally manufactured by causing reaction of organic polyisocyanate with two or more compounds containing active hydrogen under existence of a catalyst, a surfactant, and other additives. As the active hydrogen containing compound, there are used polyols, polymer polyols obtained by radical polymerization of acrylonitrile and styrene in a polyol, primary and secondary polyamines, water, and the like.

Then, in manufacturing vehicle cushion sheet foams for example, a method is generally employed which mixes a starting material by a high-pressure foaming machine or the like, molds it by injecting into a mold, and thereafter forcibly interconnects foamed cells in the foam by using a compressor.

In such a manufacturing process, reduction of molding time, lowering energy, and so on are required, and thus speed of reaction and quickness of demolding are demanded. On the other hand, in a polyurethane foam to be manufactured, low density is demanded in view of manufacturing costs and advantage in handling of molded product. In particular, in a foam for vehicle, low density for weight reduction is demanded in view of fuel consumption improvement, and increase in good seating comfort, riding comfort, and the like is also desired.

Conventionally, as a technical problem demanded for furthering low density, maintenance of durability such as reduction in compression set (also referred to as compression set) is exemplified. For example, Reference 1 proposes a technique to improve durability by using a specific cross-linking agent composition. However, the method of Reference 1 can largely improve decrease in physical properties due to low density, but has not achieved improvement in feeling and seating comfort.

Further, Reference 2 proposes a composition for manufacturing a polyurethane foam in which vulnerability of a foam surface is improved to thereby allow imparting adhesiveness without cross-linking at high temperature, by containing polyisocyanate, water, organic acid, and aprotic polar solvent. Reference 3 describes a manufacturing method of a polyurethane foam which is particularly excellent in anti-scorching by using cyclic lactone as a solvent. Moreover, Reference 4 and Reference 5 describe compounding of a specific solvent in order to improve adhesive property of a rigid polyurethane foam for a building insulation material.

However, all the compositions described in References 2 to 5 are a composition for manufacturing a rigid polyurethane foam. In case of using the compositions in References 2 to 5, it is not possible to obtain a flexible polyurethane foam which differs largely from the rigid polyurethane foam in structure of foams and characteristics. In particular, it has not been possible to obtain foams which are satisfactory in compression set and wet set as well as flexibility, feeling such as stickiness and slipperiness.

### RELEVANT REFERECNES

### Patent References

Reference 1: JP-A 2010-280743
Reference 2: JP-A 2008-534740
Reference 3: US Patent No. 6541532
Reference 4: JP-A 2008-255235
Reference 5: JP-A 2005-272576

### DTSCLOSURE OF THE INVENTION

### Problems to be Solved by the Invention

The present invention has been made to solve such problems, and an object thereof is to provide an expandable polyurethane composition capable of providing a flexible polyurethane foam of which wet set is improved, flexibility is good, and feeling such as stickiness and slipperiness is good.

### Means for Solving the Problems

An expandable polyurethane composition of the present invention includes:
(A) polyisocyanate;
(B) active hydrogen containing compound including (B1) polyol and (B2) water;
   a catalyst; and
(C) plasticizer of 0.5 to 20 parts by mass relative to 100 parts by mass of the (B1) polyol,
   in which the (C) plasticizer includes one or more plasticizers selected from the group consisting of:
   a monoester compound represented by formula (1): 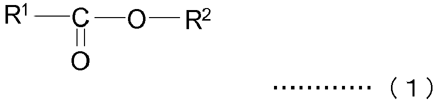 (in the formula (1), R¹ represents a monovalent hydrocarbon group of which carbon number is 6 to 24, and R² represents a monovalent hydrocarbon group of which carbon number is 1 to 24);
   a diester compound represented by formula (2): 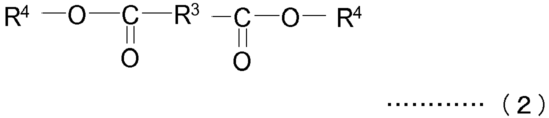 (in the formula (2), R³ represents a monovalent hydrocarbon group of which carbon number is 2 to 15, or a group in which part of hydrogen atoms of the hydrocarbon group is substituted with a hydroxyl group, and each R⁴ independently represents a monovalent hydrocarbon group of which carbon number is 1 to 24);
   a triester compound represented by formula (3): 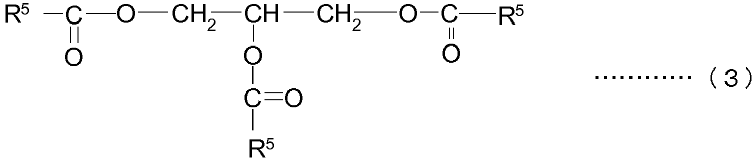 (in the formula (3), each R⁵ independently represents a monovalent hydrocarbon group of which carbon number is 1 to 24); and
   a tetraester compound represented by formula (4): 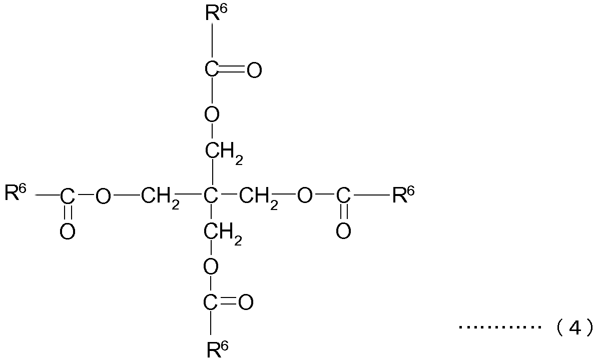 (in the formula (4), each R⁶ independently represents a monovalent hydrocarbon group of which carbon number is 1 to 24).

Further, a manufacturing method of a polyurethane foam of the present invention includes using the above-stated expandable polyurethane composition.

According to the expandable polyurethane composition of the present invention, a flexible polyurethane foam can be obtained with good manufacturing efficiency of which compression set, particularly wet set, is good and feeling such stickiness and slipperiness is good.

### DETAILED DESCRIPTION

Embodiments of the present invention are described. Note that the present invention is not limited to the following embodiments.

An expandable polyurethane composition in an embodiment of the present invention includes (A) polyisocyanate, (B) active hydrogen containing compound including (B1) polyol and (B2) water, a catalyst, and (C) plasticizer. Hereinafter, each component in the embodiment of the present invention is described.

### [(A) Polyisocyanate]

As polyisocyanate which is the (A) component, an organic isocyanate compound in publicly known aliphatic series, alicyclic series and aromatic series having two or more isocyanate groups can be used. Examples thereof include alkylene diisocyanates or arylene disocyanate such as hexamethylene diisocyanate, isophorone diisocyanate, 4,4-dicyclohexylmethane diisocyanate, 2,4- or 2,6-tolylene diisocyanate (also referred to as toluene diisocyanate or toluidine diisocyanate: TDI), alkylene diisocyanate or arylene isocyanate such as 2,2'- or 2,4'- or 4,4'-diphenylmethane diisocyanate (MDI), publicly known triisocyanate and polymeric MDI (referred to as crude diphenylmethane diisocyanate; crude MDI).

Preferred isocyanates to obtain a flexible foam are a mixture of 2,4-TDI of 80 mass% and 2,6-TDI of 20 mass%, a mixture of 2,4-TDI of 65 mass% and 2,6-TDI of 35 mass%, all of the polyisocyanates in MDI type, and a mixture of the above-stated TDI and MDI. Preferably, 10 mass% or more of polyisocyanate which is the (A) component is 2,4-TDI and/or 2,6-TDI.

The amount of polyisocyanate used for manufacturing a foam is described as "Isocyanate Index". The "Isocyanate Index" indicates the percentage of an isocyanate group relative to an active hydrogen containing group capable of reacting with the isocyanate group, and can be obtained by dividing the actual amount of polyisocyanate used in a reaction mixture by a theoretically required stoichiometric amount of the polyisocyanate necessary to react with all of the active hydrogen, and centuplicating the result. In the embodiment of the present invention, the isocyanate index is not particularly limited, but generally, the manufacturing of the flexible foam is within a range of 70 to 130.

### [(B) Active hydrogen containing compound]

The active hydrogen containing compound which is the (B) component includes (B1) polyol and (B2) water.

(B1) polyol is a compound having in a molecule two or more active hydrogen containing functional groups, such as a hydroxyl group, which can react with the isocyanate group in the (A) component, and a publicly known one can be used. The preferred number of the active hydrogen containing functional groups (hydroxyl groups) of the polyol is 2 to 8, and the most preferable number is 2.3 to 6. When the number of the hydroxyl groups is two or more, durability of the flexible polyurethane foam becomes good. When the average number of hydroxyl groups is 6 or less, the flexible polyurethane foam does not become too hard, and mechanical physical properties such as elongation become good.

As the compound having two or more hydroxyl groups, there are polyether based polyols, polyester based polyols, and the like. In particular, one which is composed of only one or more polyether based polyols, or one of which main component is the polyether based polyol and the polyester based polyol, a polyhydric alcohol, a polyamine, an alkanolamine, the other active hydrogen containing compounds are used in combination is preferred.

The polyol which can be used in the embodiment of the present invention is not particularly limited, but it is preferred to use the one classified the followings independently or by mixture.
1) alkylene oxide adduct of polyhydroxy alkane
2) alkylene oxide adduct of nonreducing sugar and sugar derivative
3) alkylene oxide adduct of phosphoric acid and polyphosphoric acid
4) alkylene oxide adduct of polyphenols
5) alkylene oxide adduct of primary and secondary amine

The alkylene oxide adduct of polyhydroxy alkane suitable for obtaining the flexible foam is an ethylene oxide adduct of trihydroxy alkane, and a propylene oxide adduct of trihydroxy alkane.

A grafted polyol or polymer polyol is one kind of polyol useful for the embodiment of the present invention, and can be used in a wide range in manufacturing of the flexible foam. The polymer polyol is, for example, a polyol containing a stable dispersion substances of polymer (for example, fine particles of vinyl polymer) in the polyol among the above-stated polyols 1) to 5), more preferably the polyol 1).

In the embodiment, as (B1) polyol, preferably, one having a hydroxyl group value of 10 to 120 mgKOH/g is used. By having the hydroxyl group value of 10 mgKOH/g or more, the viscosity of the polyol does not become high, and workability during manufacturing become good. Further, by having the hydroxyl group value of 120 mgKOH/g or less, the durability of the flexible polyurethane foam becomes good. Preferably, the hydroxyl group value of the polyol is selected according to usage of the polyurethane foam.

As a commercial product of the polyol which is the (B1) component, for example, there are SANNIX FA-703 (glycerin-propylene oxide/ethylene oxide adduct, hydroxyl group value of 33 mgKOH/g; manufactured by Sanyo Chemical Industries, Ltd.), SANNIX FA-728R (polymer polyol, hydroxyl group value of 28.5 mgKOH/g; manufactured by Sanyo Chemical Industries, Ltd.), ACTCOL PPG EP-901 (glycerin-propylene oxide/ethylene oxide adduct, hydroxyl group value of 24 mgKOH/g; manufactured by Mitsui Chemicals, Inc.), ACTCOL POP-36/90 (polymer polyol, hydroxyl group value of 24 mgKOH/g; manufactured by Mitsui Chemicals, Inc.), Adeka polyol AM-302 (glycerin-propylene oxide/ethylene oxide adduct, hydroxyl group value of 57.6 mgKOH/g; manufactured by Adeka Corporation), and the like.

The water which is the (B2) component is compounded as a chemical blowing agent which forms foams by carbon dioxide gas generated by reaction with the isocyanate group in polyisocyanate which is the (A) component. At least 50 % of the gas volume forming the foams (that is, at least 50 volume% of the total foaming gas) is preferably carbon dioxide generated by the reaction of water which is the (B2) component and the isocyanate group of (A) polyisocyanate, and in particular, more preferably, water is used solely as the blowing agent and 100% of the foaming gas volume is the carbon dioxide generated by the reaction of water and the isocyanate group. Specifically, although a physical blowing agent and a chemical blowing agent being an organic acid such as a formic acid can be concomitantly used in addition to water as the chemical blowing agent, more preferably, the water is used solely for foaming.

### [Catalyst]

The catalyst accelerates the reaction of the isocyanate group in the polyisocyanate which is the (A) component with the active hydrogen containing group in the active hydrogen containing compound which is the (B) component, and can be called a gelling catalyst. As such a catalyst, for example, tertiary amines such as triethylenediamine, bis[(2-dimethylamino)ethyl] ether, N,N,N,N-tetramethyl hexamethylene diamine, carboxylic acid metal salt such as potassium acetate, 2-ethylhexanoic acid potassium, organotin compound such as dibutyltindilaulate, stannousoctoate, and the like can be used. The compounding amount of the catalysts is an amount generally used for facilitating the reaction. Further, in the present invention, a catalyst (blow catalyst) which facilitates the reaction of the (B2) water and the isocyanate group of the polyisocyanate which is the (A) component can also be compounded.

### [(C) Plasticizer]

The (C) plasticizer used in the embodiment of the present invention is an ester compound having one or more ester groups in a molecule thereof, which can be obtained by a reaction of alcohol and carboxylic acid. The (C) plasticizer is exemplified as follows:
a monoester compound represented by formula (1): 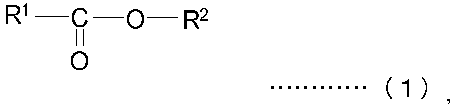
a diester compound represented by formula (2): 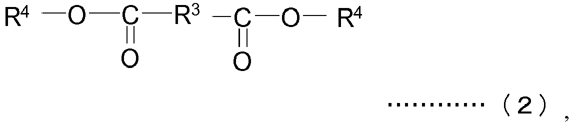
a triester compound represented by formula (3): 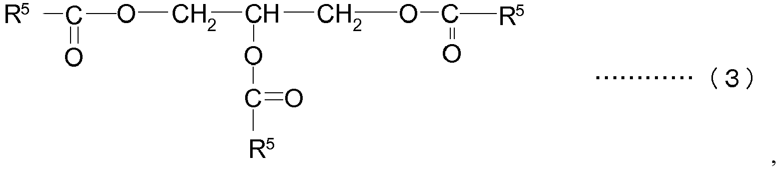 and
a tetraester compound represented by formula (4): 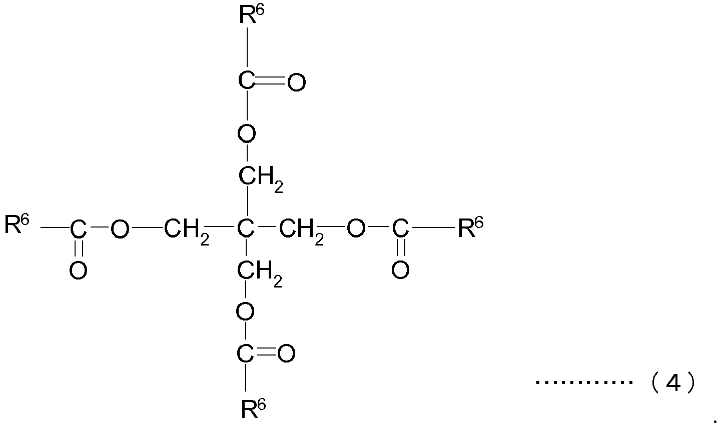
One or more of the ester compounds can be used as the plasticizer.

In the formula (1), R¹ is a monovalent hydrocarbon group of which carbon number is 6 to 24, and R² is a monovalent hydrocarbon group of which carbon number is 1 to 24. Preferably, R¹ is a monovalent hydrocarbon group of which carbon number is 8 to 18, and R² is a monovalent hydrocarbon group of which carbon number is 3 to 14.

As the monoester compound represented by the formula (1), isopropyl myristate, octyldodecyl myristate, isopropyl palmitate, cetyl palmitate, ethyl oleate, isononyl isononanate, isotridecyl isononanate, and the like are exemplified.

In the formula (2), R³ is a monovalent hydrocarbon group of which carbon number is 2 to 15, or a group in which part of hydrogen atoms of the hydrocarbon group is substituted with a hydroxyl group. Each R⁴ is independently a monovalent hydrocarbon group of which carbon number is 1 to 24. Preferably, R³ is a monovalent hydrocarbon group of which carbon number is 2 to 13, and R⁴ is a monovalent hydrocarbon group of which carbon number is 3 to 14.

As the diester compound represented by the formula (2), dibutyl adipate, dioctyl adipate, di-2-ethylhexyl adipate, diisononyl adipate, distearyl malate, dimethyl sebacate, di-2-ethylhexyl sebacate, diisodecyl sebacate, dibutyl phthalate, di-2-ethylhexyl phthalate, di-isononyl phthalate, diisodecyl phthalate, and the like are exemplified.

In the formula (3), each R⁵ is independently a monovalent hydrocarbon group of which carbon number is 1 to 24. Preferably, R⁵ is a monovalent hydrocarbon group of which carbon number is 4 to 14.

As the triester compound represented by the formula (3), tris(2-ethylhexanoic acid) glyceryl, caprylic/capric triglyceride, capric triglyceride, soy oil, and the like are exemplified.

In the formula (4), each R⁶ is independently a monovalent hydrocarbon group of which carbon number is 1 to 24. Preferably, R⁶ is a monovalent hydrocarbon group of which carbon number is 4 to 14.

As the tetraester compound represented by the formula (4), pentaerythritol caprylic/capric tetraester is exemplified.

Note that the ester compound which is the (C) component is not limited to the compounds represented by the formulae (1) to (4). For example, acetyl tributyl citrate and trimellitic acid tri-2-ethylhexyl which are ester of tervalent acid and monovalent alcohol are also usable.

In the embodiment of the present invention, the compounding ratio of such (C) plasticizer is 0.5 to 20 parts by mass relative to 100 parts by mass of the polyol which is the (B1) component. A range of 1 to 12 parts by mass is more preferred. When the compounding ratio of the (C) plasticizer is less than 0.5 part by mass, it is difficult to improve feeling such as stickiness and slipperiness of the foam. Further, when the compounding ratio exceeds 20 parts by mass, decrease of other physical properties occurs, which is hence not preferred.

In the expandable polyurethane composition of the present invention, moreover, (D) ethoxylate derivative which will be described below can be compounded.

### [(D) Ethoxylate derivative]

(D) ethoxylate derivative is also called an ethylene oxide derivative and has a function as the cross-linking agent. As the (D) ethoxylate derivative, one represented by

formula (5): HO(CH₂CH₂O)ₘH,

or

formula (6): R⁷-[(CH₂CH₂O)ₙH]ₓ,

and with a mass average molecular weight (Mw) of 2000 or less is preferred. The mass average molecular weight (Mw) is further preferably 1200 or less.

In the formula (5), m is an integer of 3 to 30. Preferably, m is an integer of 5 to 25. Further, in the formula (6), R⁷ is a group selected from a glycerol group, a trimethylol group, a pentaerythritol group, and a diglycerol group. Preferably, R⁷ is a glycerol group. n is an integer of 1 to 15, and x is 3 or 4. Preferably, n is an integer of 2 to 8, and preferably x is 3.

Specifically, preferred examples of the (D) ethoxylate derivative include polyoxyethylene glyceryl ether, polyethylene glycol, polyoxyethylene trimethylol ether, polyoxyethylene pentaerythritol ether, polyoxyethylene diglycerol ether, and the like.

In the embodiment of the present invention, preferably, the compounding ratio of such (D) ethoxylate derivative is 0.1 to 20 parts by mass relative to 100 parts by mass of the polyol which is the (B1) component. A range of 0.1 to 10 parts by mass is more preferred. By compounding the (D) ethoxylate derivative in the above range, improvement in hardness of the foam and suppression of the viscosity increase of the composition can be achieved without decreasing other physical properties.

In the present invention, when the (D) ethoxylate derivative is compounded, preferably, the mass ratio (a/b) of the content a of the (C) plasticizer and the content b of the (D) ethoxylate derivative is in the range of 1/10 to 10/1. More preferably, a/b is in the range of 2/8 to 8/2. When a/b is less than 1/10, good feeling, namely, satisfactory touch and improvement in seating comfort cannot be obtained. When a/b is more than 10/1, durability can be insufficient.

The foam composition in the embodiment of the present invention is obtained by mixing the (A) to (C) components and the catalyst, and the (D) component as necessary, with a high-speed mixer or the like.

In the foam composition of the embodiment, a surfactant can be compounded in addition to the (A) to (C) components and the catalyst. Additives such as a filler, a stabilizer, a coloring agent, a flame retardant, and the like can be further compounded as necessary. The foam adjusting agent is a surfactant compounded for forming good foams. As the surfactant, any agent can be used as long as it is publicly known as a surfactant in polyurethane industries. For example, there are a silicone based surfactant and a fluorine-containing compound based surfactant.

By using such an expandable polyurethane composition of the present invention, a flexible polyurethane foam can be manufactured by one-shot foaming method. Note that the "one-shot foaming method" is a method of manufacturing a polyurethane foam in one stage. In this method, all of the components needed for manufacturing the polyurethane foam including the polyisocyanate, the polyol, the water, the cross-linking agent, the catalyst, the surfactant, an arbitrary selective blowing agent, and so on are simply blended together, the resultant is foamed on a moving conveyor or by pouring into a mold of appropriate form, and then cured.

The foam which can be obtained from the expandable polyurethane composition of the present invention preferably has density of 14 kg/m³ or more from the point of obtaining a high resilience characteristic, and the like. Further, the foam preferably has density of 80 kg/m³ or less from the points of feeling such as seating comfort, riding comfort, touch, and so on and costs.

With the expandable polyurethane composition in the embodiment of the present invention, in the manufacturing of the polyurethanes, preferably the one-shot polyurethanes, particularly the flexible polyurethane foams, manufacturing efficiency can be improved largely by using a specific plasticizer, to thereby obtain the flexible polyurethane foam with good physical properties. More specifically, the flexible polyurethane foam in which compression set or wet set is improved, and which has good stickiness and slipperiness and excels in feeling such as touch can be obtained. The obtained flexible polyurethane foam is preferred for vehicle seats, furniture cushions, bedding mattresses, and the like as a high-repulsion polyurethane foam.

### EXAMPLES

Specific examples of the present invention will be described below.

### Examples 1 to 12, Comparative example 1

(A) polyisocyanate, (B1) polyol, (B2) water, plasticizer-1 to plasticizer-6 which are the (C) component, ethoxylate derivative which is the (D) component, the catalyst and the surfactant were compounded by the compositions (parts by mass) presented in Table 1 in Examples 1 to 7 and by the compositions (parts by mass) presented in Table 2 in Examples 8 to 12 and Comparative example 1, and mixed by a high-speed mixer.

Note that CORONATE 1021 (blended isocyanate composed of TDI of 80 mass% and MDI of 20 mass%: manufactured by Nippon Polyurethane Industries Co., LTD) was used as (A) polyisocyanate, Sannix FA-703 (glycerin-propylene oxide/ethylene oxide adduct, hydroxyl group value 34 mgKOH/g; manufactured by Sanyo Chemical Industries, Ltd.) was used as polyether polyol of the (B1) component, Sannix FA-728R (hydroxyl group value 34 mgKOH/g; manufactured by Sanyo Chemical Industries, Ltd.) was used as polymer polyol of the (B1) component, Niax catalyst A-1 (manufactured by Momentive Performance Materials Japan LLC) was used as an amine based blow catalyst, Niax catalyst A-33 (manufactured by Momentive Performance Materials Japan LLC) was used as an amine based gelling catalyst, and NIAX silicone L-3642J (silicone based surfactant: manufactured by Momentive Performance Materials Japan LLC) was used as a surfactant.

Note that as described above, the blow catalyst is a catalyst which facilitates the reaction of (B2) water and the isocyanate group in (A) polyisocyanate, and the gelling catalyst is a catalyst which facilitates the reaction of the isocyanate group in (A) polyisocyanate and the active hydrogen containing group in (B) active hydrogen containing compound.

Further, as the (C) plasticizer-1 to plasticizer-6, ones described below were used.
- Plasticizer-1
   Isopropyl myristate (product name: EXCEPARL IPM, manufactured by Kao Chemicals)
- Plasticizer-2
   Octyldodecyl myristate (manufactured by NOF Corporation)
- Plasticizer-3
   Tris(2-ethylhexanoic acid) glyceryl (product name: Panasate 800B, manufactured by NOF Corporation)
- Plasticizer-4
   Isononyl isononanate (product name: Salacos 99, manufactured by the Nisshin OilliO Group, Ltd)
- Plasticizer-5
   Caprylic/capric triglyceride (product name: O.D.O, manufactured by the Nisshin OilliO Group, Ltd)
- Plasticizer-6
   Dioctyl adipate (product name: DOA, manufactured by DAIHACHI CHEMICAL INDUSTRY CO., LTD.)

Moreover, as the ethoxylate derivative which is the (D) component, polyoxyethylene glyceryl ether (Mw = 990) (product name: UCON TPEG-990: manufactured by Dow Chemical Company) was used.

Next, after mixing, the mixture was immediately poured into an aluminum mold (internal dimensions 300 x 300 x 100 mm) whose temperature is controlled at 60 ± 2°C, the lid of the mold was closed, and it was foamed and molded by retaining as it is for five minutes, thereby obtaining a polyurethane foam. At this time, a discharge time was measured as described below. Further, the density of the foam was measured as described below.

### [Discharge time]

A time (seconds) from the addition of (A) polyisocyanate into the reaction mixture until the foam is pushed out and first appears through four gas vent holes at an upper part of the mold was measured as a discharge time.

### [Density]

Density (kg/m³) of the obtained foam was measured as overall density after taken out of the mold.

Further, the characteristics of the polyurethane foam were measured as described below in accordance with JIS K 6401, and the feeling test was performed.

### [Force-to-crush: FTC]

FTC was measured from when one minute has passed after the foam is taken out of the mold, and is a peak force needed for compressing the foam (foam pad) from an initial thickness to 50%. It was measured by using a load tester of which settings were the same as the one used for the hardness measurement. The FTC value (N) is a good measure for evaluating communication ability of foams. The lower the FTC value, the higher the communication ability of foams.

### [Hardness]

After it was taken out of the mold and let stand still for one day at room temperature, the hardness (N) of the same pad used for the FTC measurement was measured in accordance with the measurement of hardness of JIS K6401.

### [Compression set]

It was measured in accordance with JIS K6400-4:2004 (ISO1856: 2000). Specifically, a test piece with a length of one side of 50 ± 1 mm and a thickness of 25 ± 1 mm was let stand for 22 hours at a temperature of 70 ± 1°C in a state of being compressed by 50% in a thickness direction. Thereafter, the test piece was removed from a compression jig, let stand for 30 minutes at room temperature to allow recovery, and then its thickness was measured. The compression set was obtained thus.

### [Wet heat compression set]

A wet heat aging test was performed in accordance with JIS K6400-4:2004 (ISO1856: 2000), and the compression set (%) was measured. Specifically, a test piece with a length of one side of 50 ± 1 mm and a thickness of 25 ± 1 mm was let stand for 22 hours at 70 ± 1°C under 95% RH in a state of being compressed by 50% in a thickness direction. Thereafter, the test piece was removed from a compression jig, let stand for 30 minutes at room temperature to allow recovery, and then its thickness was measured. The wet heat compression set was obtained thus.

### [Feeling test]

A foam surface after it is let stand for one day at room temperature was touched by bare hands to evaluate feeling. Stickiness and slipperiness were evaluated by three levels.

Measurement results of the characteristics of these foams are presented in the lower fields of Table 1 and Table 2 together with measurement results of the density and the discharge time. Note that in the feeling test results in the tables, X indicates good, Y indicates moderately good, and Z indicates no good for both the stickiness and slipperiness.

**[Table 1]**

| | | | Example 1 | Example 2 | Example 3 | Example 4 | Example 5 | Example 6 | Example 7 |
|---|---|---|---|---|---|---|---|---|---|
| Composition | (Parts by mass) | (B1) Polyether polyol | 75.0 | 75.0 | 75.0 | 75.0 | 75.0 | 75.0 | 75.0 |
| | | (B1) Polymer polyol | 25.0 | 25.0 | 25.0 | 25.0 | 25.0 | 25.0 | 25.0 |
| | | (B2) Water | 3.2 | 3.2 | 3.2 | 3.2 | 3.2 | 3.2 | 3.2 |
| | | Amine based gelling catalyst | 0.4 | 0.4 | 0.4 | 0.4 | 0.4 | 0.4 | 0.4 |
| | | Amine based blow catalyst | 0.1 | 0.1 | 0.1 | 0.1 | 0.1 | 0.1 | 0.1 |
| | | Silicone surfactant | 1.0 | 1.0 | 1.0 | 1.0 | 1.0 | 1.0 | 1.0 |
| | | (C) Plasticizer-1 | 1.0 | 3.0 | 5.0 | | | | |
| | | (C) Plasticizer-2 | | | | 5.0 | | | |
| | | (C) Plasticizer-3 | | | | | 5.0 | | |
| | | (C) Plasticizer-4 | | | | | | 5.0 | |
| | | (C) Plasticizer-5 | | | | | | | 5.0 |
| | | (C) Plasticizer-6 | | | | | | | |
| | | (D) Ethoxylate derivative | | | | | | | |
| | (A) Polyisocyanate (index) | | 95 | 95 | 95 | 95 | 95 | 95 | 95 |
| Characteristic value | Density (kg/m³) | | 59.3 | 60.3 | 60.1 | 61.1 | 60.9 | 61.1 | 60.6 |
| | Discharge time (seconds) | | 35.0 | 3 8.0 | 41.0 | 44.0 | 47.0 | 43.0 | 43.0 |
| | FTC at 50% (N) | | 312.8 | 228.3 | 199.0 | 250.7 | 211.6 | 170.4 | 157.4 |
| | Hardness at 25% (N/314 cm²) | | 194.8 | 194.1 | 189.1 | 182.1 | 187.2 | 188.2 | 207.2 |
| | Compression set (%) | | 5.1 | 5.2 | 4.4 | 4.7 | 5.1 | 5.4 | 5.2 |
| | Wet heat compression set (%) | | 22.3 | 21.6 | 20.0 | 23.7 | 21.3 | 22.3 | 18.7 |
| | Feeling test, stickiness | | Y | Y | X | X | Y | Y | Y |
| | Feeling test, slipperiness | | Y | Y | Y | Y | X | Y | Y |

**[Table 2]**

| | | | Example 8 | Example 9 | Example 10 | Example 11 | Example 12 | Comparative Example 1 |
|---|---|---|---|---|---|---|---|---|
| Composition | (Parts by mass) | (B1) Polyether polyol | 75.0 | 75.0 | 75.0 | 75.0 | 75.0 | 75.0 |
| | | (B1) Polymer polyol | 25.0 | 25.0 | 25.0 | 25.0 | 25.0 | 25.0 |
| | | (B2) Water | 3.2 | 3.2 | 3.2 | 3.2 | 3.2 | 3.2 |
| | | Amine based gelling catalyst | 0.4 | 0.4 | 0.4 | 0.4 | 0.4 | 0.4 |
| | | Amine based blow catalyst | 0.1 | 0.1 | 0.1 | 0.1 | 0.1 | 0.1 |
| | | Silicone surfactant | 1.0 | 1.0 | 1.0 | 1.0 | 1.0 | 1.0 |
| | | (C) Plasticizer-1 | | 4.0 | 2.5 | 1.0 | | |
| | | (C) Plasticizer-2 | | | | | 4.0 | |
| | | (C) Plasticizer-3 | | | | | | |
| | | (C) Plasticizer-4 | | | | | | |
| | | (C) Plasticizer-5 | | | | | | |
| | | (C) Plasticizer-6 | 5.0 | | | | | |
| | | (D) Ethoxylate derivative | | 1.0 | 2.5 | 4.0 | 1.0 | |
| | (A) Polyisocyanate (index) | | 95 | 95 | 95 | 95 | 95 | 95 |
| Characteristic value | Density (kg/m³) | | 61.1 | 60.6 | 60.3 | 60.6 | 60.1 | 59.3 |
| | Discharge time (seconds) | | 43.0 | 41.0 | 41.0 | 41.0 | 41.0 | 36.0 |
| | FTC at 50% (N) | | 214.8 | 202.3 | 184.9 | 185.2 | 263.8 | 421.4 |
| | Hardness at 25% (N/314 cm²) | | 183.8 | 188.8 | 196.1 | 192.0 | 184.9 | 199.1 |
| | Compression set (%) | | 5.3 | 4.8 | 4.7 | 4.2 | 4.8 | 5.3 |
| | Wet heat compression set (%) | | 20.5 | 19.9 | 18.1 | 14.2 | 18.3 | 24.6 |
| | Feeling test, stickiness | | Y | X | Y | Y | Y | Z |
| | Feeling test, slipperiness | | Y | Y | Y | Y | Y | Z |

### Examples 13 to 15, Comparative example 2

(A) polyisocyanate, (B1) polyol, (B2) water, plasticizer-1 and plasticizer-5 which are the (C) component, the catalyst and the surfactant were compounded by the compositions (parts by mass) presented in Table 3 and mixed by a high-speed mixer.

Note that CORONATE T-80 (blended isocyanate composed of 2,4-TDI of 80 mass% and 2,6-TDI of 20 mass%: manufactured by Nippon Polyurethane Industries Co., LTD) was used as (A) polyisocyanate, Adeka Polyol G-3000B (glycerin-propylene oxide adduct, hydroxyl group value 54 mgKOH/g; manufactured by Adeka Corporation) was used as the polyether polyol of the (B1) component, Niax catalyst A-1 (manufactured by Momentive Performance Materials Japan LLC) was used as an amine based blow catalyst, Niax catalyst D-19 (2-ethylhexanoic acid tin: manufactured by Momentive Performance Materials Japan LLC) was used as a tin based gelling catalyst, and NIAX silicone L-595 (silicone based surfactant: manufactured by Momentive Performance Materials Japan LLC) was used as a surfactant. Further, the above-stated ones were used as plasticizer-1 and plasticizer-5 which are the (C) component.

After mixing, the mixture was poured immediately into a wooden mold (internal dimensions 200 x 200 x 200 mm) in which a release paper is laid, and it was foamed and molded by retaining as it is for three minutes at room temperature (23°C ± 2°C). Thereafter, the foam was taken out together with the release paper from the wooden mold, cross-linked by heating for ten minutes in an oven at 120°C, and then cooled to the room temperature to obtain a polyurethane foam.

Next, the thus obtained polyurethane foam was cut out by 10 cm x 10 cm x 10 cm, and thereafter density (kg/m³) thereof was measured.

Further, the hardness and the air permeability of the obtained polyurethane foam were measured as described below. The compression set (%) and the wet heat compression set (%) were measured similarly to Examples 1 to 13 and Comparative example 1. Moreover, the feeling test was performed to evaluate similarly as described above. Measurement results thereof are presented in the lower field of Table 3.

### [Hardness]

It was measured in accordance with the measurement of hardness of JIS K6401-2: 2004 (ISO2439: 1997). A compression board with a size of 314 cm² was used, and hardness (25% hardness) when compressed by 25% was measured.

### [Air permeability]

In accordance with JIS K6400-7:2004 B method (ISO7231: 1984), the air permeability (L/min.) was measured by using a test piece with a length of one side of 51.0 ± 0.3 mm and a thickness of 25.0 ± 0.3 mm and measuring a necessary air flow rate for maintaining a pressure difference between the front and back of the test piece.

**[Table 3]**

| | | | Example 13 | Example 14 | Example 15 | Comparative Example 2 |
|---|---|---|---|---|---|---|
| Composition | (Parts by mass) | (B1) Polyether polyol | 100.0 | 100.0 | 100.0 | 100.0 |
| | | (B2) Water | 3.6 | 3.6 | 3.6 | 3.6 |
| | | Tin based gelling catalyst | 0.15 | 0.15 | 0.15 | 0.15 |
| | | Amine based blow catalyst | 0.1 | 0.1 | 0.1 | 0.1 |
| | | Silicone surfactant | 1.0 | 1.0 | 1.0 | 1.0 |
| | | (C) Plasticizer-1 | | | 3.0 | |
| | | (C) Plasticizer-5 | 3.0 | 5.0 | | |
| | (A) Polyisocyanate (index) | | 115 | 115 | 115 | 115 |
| Characteristic value | Density (kg/m³) | | 28.8 | 29.5 | 29.1 | 30.3 |
| | Hardness at 25% (N/314 cm²) | | 81.0 | 79.0 | 87 | 89 |
| | Compression set (%) | | 1.7 | 1.1 | 1.9 | 2.6 |
| | Wet heat compression set (%) | | 5.0 | 5.1 | 4.7 | 6.1 |
| | Air permeability (L/min) | | 144 | 135 | 144 | 127 |
| | Feeling test, stickiness | | X | X | Y | Z |
| | Feeling test, slipperiness | | Y | X | X | Z |

As can be seen from the measurement results of Table 1 to Table 3, the polyurethane foams of Examples 1 to 15 obtained by foaming the composition in which (A) polyisocyanate, (B) active hydrogen containing compound including (B1) polyol and (B2) water, and the catalyst, and moreover (C) plasticizer having one or more ester groups in a molecule are compounded in the predetermined ratio, are improved in wet set as compared to the polyurethane foams of Comparative example 1 and Comparative example 2 obtained without compounding the plasticizer. Further, the polyurethane foams of Examples 1 to 15 exhibit good feeling for both stickiness and slipperiness in the feeling test.

### Industrial Applicability

According to the expandable polyurethane composition of the present invention, a flexible polyurethane foam can be obtained with good manufacturing efficiency of which compression set, particularly wet set, is improved and feeling such as stickiness and slipperiness is good. The obtained flexible polyurethane foam is preferred for vehicle seats, furniture cushions, bedding mattresses, and the like as a high- resilience polyurethane foam.

## Claims

1. An expandable polyurethane composition, comprising:
(A) polyisocyanate;
(B) active hydrogen containing compound including (B1) polyol and (B2) water; a catalyst; and
(C) plasticizer of 0.5 to 20 parts by mass relative to 100 parts by mass of the (B1) polyol, wherein the (C) plasticizer comprises one or more compounds selected from the group consisting of:
a monoester compound represented by formula (1): 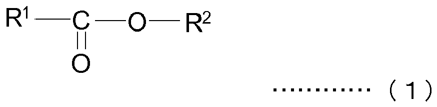 (in the formula (1), R¹ represents a monovalent hydrocarbon group of which carbon number is 6 to 24, and R² represents a monovalent hydrocarbon group of which carbon number is 1 to 24);
a diester compound represented by formula (2): 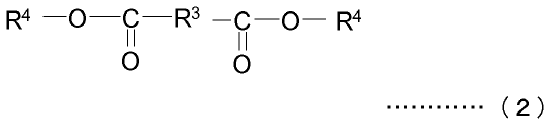 (in the formula (2), R³ represents a monovalent hydrocarbon group of which carbon number is 2 to 15, or a group in which part of hydrogen atoms of the hydrocarbon group is substituted with a hydroxyl group, and each R⁴ independently represents a monovalent hydrocarbon group of which carbon number is 1 to 24);
a triester compound represented by formula (3): 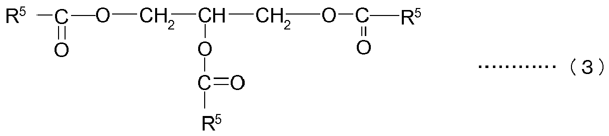 (in the formula (3), each R⁵ independently represents a monovalent hydrocarbon group of which carbon number is 1 to 24); and
a tetraester compound represented by formula (4): 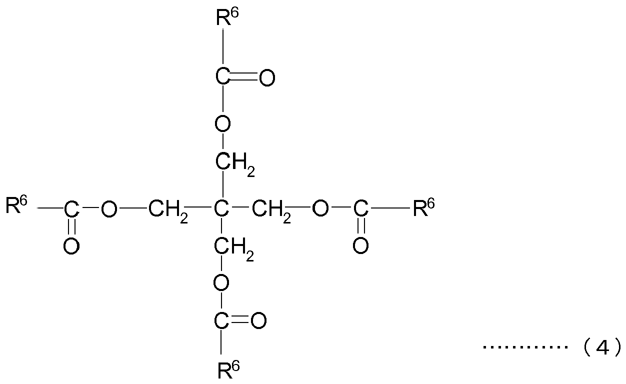 (in the formula (4), each R⁶ independently represents a monovalent hydrocarbon group of which carbon number is 1 to 24).

2. The expandable polyurethane composition according to claim 1, further comprising (D) ethoxylate derivative of 0.1 to 20 parts by mass relative to 100 parts by mass of the (B1) polyol,
wherein the (D) ethoxylate derivative comprises:
formula (5): HO(CH₂CH₂O)ₘH
(in the formula (5), m is an integer of 3 to 30); or
formula (6): R⁷-[(CH₂CH₂O)ₙH]ₓ
(in the formula (6), R⁷ represents a group selected from a glycerol group, a trimethylol group, a pentaerythritol group, and a diglycerol group, n is an integer of 1 to 15, and x is 3 or 4), and
wherein the (D) ethoxylate derivative has a mass average molecular weight of 2000 or less.

3. The expandable polyurethane composition according to claim 2,
wherein the (D) ethoxylate derivative has a mass average molecular weight of 1200 or less.

4. The expandable polyurethane composition according to claim 3,
wherein the (D) ethoxylate derivative is a compound in which R⁷ is a glycerol group and x is 3 in the formula (6): R⁷-[(CH₂CH₂O)ₙH]ₓ.

5. The expandable polyurethane composition according to any one of claims 2 to 4,
wherein a mass ratio (a/b) of content (a) of the (C) plasticizer and content (b) of the (D) ethoxylate derivative is 1/10 to 10/1.

6. The expandable polyurethane composition according to any one of claims 1 to 5,
wherein the (A) polyisocyanate comprises 2,4-tolylene diisocyanate and/or 2,6-tolylene diisocyanate, of which content rate to the (A) polyisocyanate is 10 mass% or more.

7. The expandable polyurethane composition according to any one of claims 1 to 6,
wherein a foam obtained from the expandable polyurethane composition has density of 14 kg/m³ or more and 80 kg/m³ or less.

8. A manufacturing method of a flexible polyurethane foam, comprising using the expandable polyurethane composition according to any one of claims 1 to 7.
